# EUROPEAN PATENT APPLICATION

(11) **EP 1 253 753 A2**
(43) Date of publication of application: **30.10.2002**
(21) Application number: 02252826.9
(22) Date of filing: 23.04.2002
(51) Int. Cl.: H04L 12/56

(54) **Wireless communication apparatus and microwave oven cooperating with the same**

(30) Priority: 23.04.2001 JP 2001124648; 23.04.2001 JP 2001124643
(71) Applicant: Kabushiki Kaisha Toshiba, Tokyo (JP)
(72) Inventor: Furuta, Kazuhiro, Toshiba Corporation, Minato-ku, Tokyo (JP); Noda, Tomimitsu, Toshiba Corporation, Minato-ku, Tokyo (JP); Tanaka, Toshimasa, Toshiba Corporation, Minato-ku, Tokyo (JP)
(74) Representative: O'Connell, David Christopher

(57) **Abstract**

A microwave oven has an inverter controller (115) that controls an inverter (102) to produce high-frequency power from a commercial power source (107) and supply the high-frequency power to a magnetron (101). The inverter controller (115) stops the output of the magnetron for a predetermined period (τ11) around a zero-volt crossing point of the commercial power source (107), to enable wireless communication during the period (τ11) at a frequency band equivalent to a frequency band of the magnetron (101). Even during the operation of the magnetron (101), wireless communication is secured at the frequency band without interrupting a heating (cooking) operation or deteriorating heating efficiency.

## Description

### BACKGROUND OF THE INVENTION

### 1. Field of the Invention

The present invention relates to a wireless communication apparatus to perform short-range wireless network communication at or around a frequency band of 2.4 GHz to 2.5 GHz used by magnetrons installed in microwave ovens.

The present invention also relates to a microwave oven capable of minimizing a frequency interference with a wireless communication network that employs a frequency band used by magnetrons installed in microwave ovens.

### 2. Description of the Related Art

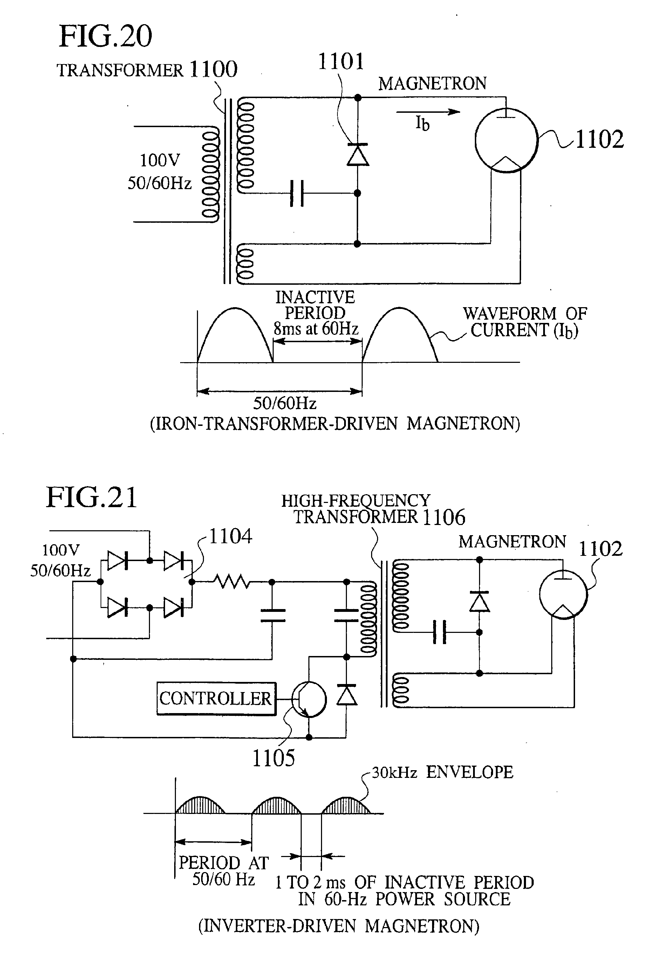

A microwave oven has a magnetron that generates microwaves in the range of 2.4 GHz to 2.5 GHz to cook food in the oven. Figure 20 shows an example of an iron-transformer-driven magnetron in a microwave oven. A transformer 1100 and a diode 1101 generate a voltage-doubled, half-wave current from a commercial AC power source and supply the generated current to the magnetron 1102. Figure 21 shows an example of an inverter-driven magnetron in a microwave oven. The example includes a full-wave rectifier 1104, an inverter 1105, and a high-frequency transformer 1106, to full-wave rectify a commercial AC power source and provide a current of about 30 to 50 kHz to the magnetron 1102.

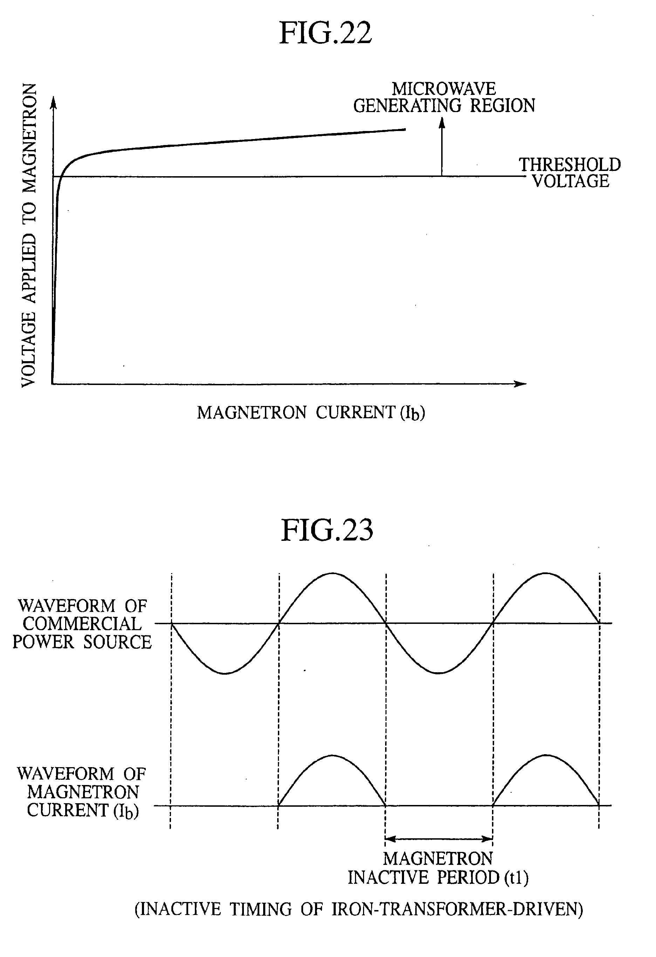

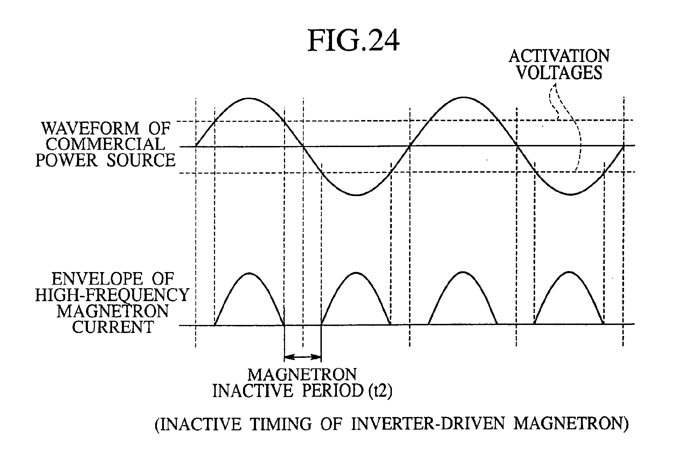

Figure 22 shows the microwave generating characteristics of a standard magnetron installed in a microwave oven. The magnetron shows high resistance and generates no microwaves up to a threshold voltage. When a voltage exceeding the threshold voltage is applied, the magnetron shows low resistance and passes a current Ib to generate microwaves. Figure 23 shows active and inactive periods of the iron-transformer-driven magnetron. The iron-transformer-driven magnetron receives no voltage during a negative half period t1 of the commercial AC power source. The period t1 corresponds to 10 ms if the power source is of 50 Hz and 8 ms if the power source is of 60 Hz, and during this period, the magnetron generates no microwaves. Figure 24 shows active and inactive' periods of the inverter-driven magnetron. The magnetron generates no microwaves until a voltage applied thereto reaches an activation voltage. Namely, the magnetron generates no microwaves in an inactive period t2 extending around a zero-volt crossing point. The length of the inactive period t2 is dependent on operating conditions and is 1 to 2 ms if the power source is of 60 Hz. In this way, the two magnetrons mentioned above involve the inactive periods t1 and t2, respectively.

There is a technique of using a frequency band that overlaps a frequency band allocated for microwave ovens, to realize short-range wireless network communication and remote-control environments among home appliances including the ovens. This technique has a problem that microwaves from a magnetron in a microwave oven interfere with communication signals from a wireless communication apparatus in the oven or in any other appliance in the vicinity of the oven. The interference makes it impossible to identify communication signals, and therefore, no wireless communication is achievable during the operation of the magnetron.

A spread spectrum wireless communication system has been developed to cope with noise. This system employs a direct spreading technique or a frequency hopping technique. The direct spreading technique divides an allocated frequency band into a small number of channels and spreads a signal over each channel. The frequency hopping technique sets a unit time slot and spreads a signal over an allocated frequency band within each unit time slot. This frequency hopping technique is used in Bluetooth wireless communication.

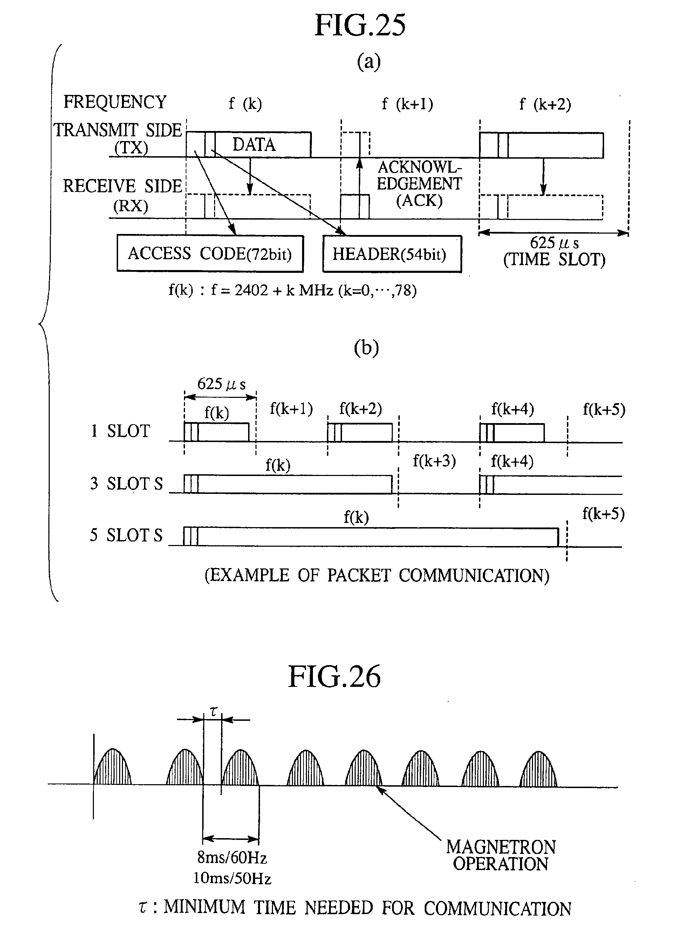

Figure 25(a) roughly shows the Bluetooth technology. The Bluetooth technology divides a frequency band of 2.402 GHz to 2.480 GHz into 79 channels each of a 1-MHz width, sets a unit time slot of 625 µs, and pseudo-randomly spreads a signal over the 79 channels. According to the Bluetooth, a minimum transmission time slot is 625 µs, and within this time slot, communication packets are carried. A communication task completes with a transmission signal and an acknowledge (ACK) signal confirming the reception of the transmission signal. Namely, a Bluetooth communication task is theoretically achievable if a period of "unit time slot x 2 (= 1.25 ms)" is secured. Generally, it is difficult to carry out communication in synchronization with a power source frequency, and therefore, a communication task needs two times the theoretical period, i.e., four times the unit time slot (= 2.5 ms). The acknowledge signal ACK, however, is transmittable with a smaller number of bits than needed for a data signal. Namely, the acknowledge signal is transmittable with 126 bits (126 µs). This means that, if a magnetron inactive period of "unit time slot x 3 + 0.126 ms (= 2.001 ms)" is secured, a communication task is achievable in the magnetron inactive period while the oven is cooking food. Figure 26 shows a magnetron active period and a magnetron inactive period of the inverter-driven magnetron. The magnetron inactive period corresponds to a wireless communication possible period. Bluetooth wireless communication is possible if the inactive period τ = 2.001 ms is secured within a period (8 ms at 60 Hz and 10 ms at 50 Hz) of a commercial power source.

Figure 25(b) shows various transmission modes according to the Bluetooth technology. A 1-slot mode has a unit time of 625 µs to transmit packets, a 3-slot mode has a unit time of 1.875 ms (= 625 µs x 3) to transmit packets, and a 5-slot mode has a unit time of 3.125 ms (= 625 µs x 5) to transmit packets. The 3-slot mode involves a unit communication time of (1.875 x 2 + 0.625 + 0.126) ms = 4.4 ms, and the 5-slot mode involves a unit communication time of (3.125 x 2 + 0.625 + 0.126) ms = 7.001 ms.

A microwave oven employing the inverter-driven magnetron involves a magnetron inactive period of 1 to 2 ms, which is insufficient to carry out the Bluetooth wireless communication. On the other hand, a microwave oven employing the iron-transformer-driven magnetron involves a magnetron inactive period of 8 ms, which is sufficient to carry out the Bluetooth wireless communication. Effectively using the 8-ms period enables two 5-slot communication operations, to improve communication efficiency.

Japanese Patent Laid Open Publication No. 2000-224176 is a related art that detects microwave generation timing and chooses a microwave resistive communication mode according to the detected microwave generation timing. This related art must install a timing detector in a microwave oven and is incapable of preventing an interference with other microwave ovens.

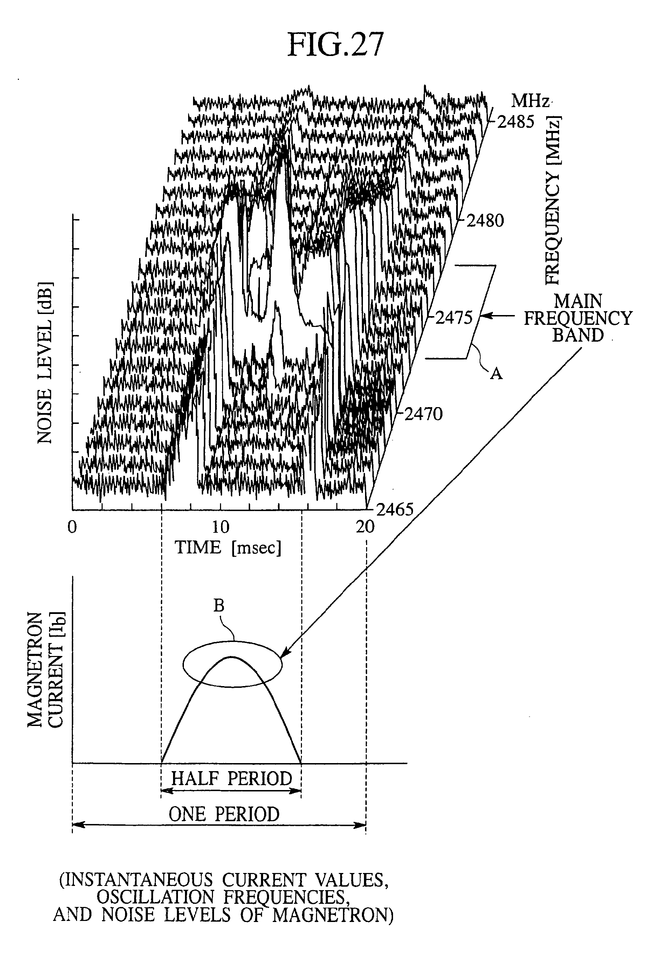

Japanese Patent Laid Open Publication No. 6-140966 is a related art that detects a period of a commercial power source and carries out communication at 0-volt crossing timing of the commercial power source. This related art is applicable to a microwave oven employing the iron-transformer-driven magnetron and must have a switch to carry out communication within a magnetron inactive period. A microwave oven employing the inverter-driven magnetron involves a magnetron inactive period t2 extending before and after a zero-volt crossing point of a commercial power source. In this case, the related art is incapable of using the whole of the inactive period t2 for communication. This deteriorates communication efficiency. In addition, the related art carries out no communication in a magnetron active period even if communication is achievable during this period. This deteriorates communication even in the microwave oven employing the iron-transformer-driven magnetron. Figure 27 shows examples of noise levels measured in a magnetron driven by a power source of 50 Hz. The magnetron changes oscillation frequencies in response to the value of an instantaneous current passing through the magnetron. The frequencies and time bands that disable communication during the operation of the magnetron are limited to a frequency A and a time band B.

The microwave oven employing the inverter-driven magnetron involves inverter frequencies of 30 to 50 kHz that are about 1000 times the frequencies of a commercial power source. Accordingly, no communication time is securable in an envelope period of the magnetron current of Fig. 24.

### SUMMARY OF THE INVENTION

An object of the present invention is to provide a wireless communication apparatus capable of operating in a microwave oven without a special detector detecting the operation timing of a magnetron installed in the oven, the magnetron being an iron-transformer-driven one or an inverter-driven one. The communication apparatus is also capable of surely carrying out wireless communication even during the operation of the oven, and optimizing the wireless communication according to the type of the magnetron.

Another object of the present invention is to provide a microwave oven capable of cooperating with a wireless communication apparatus and allowing the wireless communication apparatus to surely carry out wireless communication at a frequency band equivalent to a frequency band of a magnetron, while continuing a cooking operation without lowering heating efficiency.

A first aspect of the present invention provides a wireless communication apparatus having a transmitter to transmit digital information in packets, a crossing timing detector to detect a zero-volt crossing point of a commercial power source, and a communication controller to control the start of a time slot in which the transmitter transmits packets, according to the detected zero-volt crossing point.

According to the first aspect, the crossing timing detector detects a zero-volt crossing point of a commercial power source. According to the detected zero-volt crossing point, the communication controller controls the start of a time slot in which the transmitter transmits packets. Namely, the first aspect synchronizes the start of a packet transmitting time slot with the zero-volt crossing point. Alternatively, the start of a packet transmitting time slot is set at a time point a predetermined time before the next zero-volt crossing point that is estimated from the detected zero-volt crossing point. The first aspect aligns the start of a packet transmitting time slot with the start of a magnetron inactive period, to achieve wireless communication at a frequency band equivalent to a frequency band of the magnetron during the operation of the oven.

A second aspect of the present invention provides a microwave oven having a magnetron to generate microwaves, an inverter to produce high-frequency power from a commercial power source and supply the high-frequency power to the magnetron, and an output controller to stop the output of the magnetron for a predetermined period around a point where the commercial power source crosses a zero-volt level.

According to the second aspect, the inverter produces high-frequency power from a commercial power source and supplies the high-frequency power to the magnetron. The output controller stops the output of the magnetron for a predetermined period around a point where the commercial power source crosses a zero-volt level. During a magnetron inactive period, the second aspect enables wireless communication at a frequency band equivalent to a frequency band of the magnetron. Namely, the second aspect surely carries out wireless communication at the equivalent frequency band during a heating (cooking) operation achieved by the magnetron without deteriorating its heating efficiency.

### BRIEF DESCRIPTION OF THE DRAWINGS

Figure 1 is a block diagram showing the structure of a microwave oven incorporating a wireless communication apparatus according to a first embodiment of the present invention;
Fig. 2 is a block diagram showing a wireless communication network including the wireless communication apparatus of the first embodiment;
Fig. 3 is a block diagram showing the wireless communication apparatus of the first embodiment;
Fig. 4 is a timing chart showing the waveform of a commercial power source, the waveform of a current into an iron-transformer-driven magnetron, the envelope of a high-frequency current into an inverter-driven magnetron, and the transmit timing of wireless communication packets;
Fig. 5 is a flowchart showing wireless communication operations carried out by the wireless communication apparatus of the first embodiment;
Fig. 6 is a block diagram showing a wireless communication apparatus according to a second embodiment of the present invention;
Fig. 7 shows a detected waveform of a leakage radio wave from an iron-transformer-driven magnetron, a detected waveform of a leakage radio wave from an inverter-driven magnetron, and a detected waveform of a communication signal according to the wireless communication apparatus of the second embodiment;
Fig. 8 is a circuit diagram showing a microwave oven according to a third embodiment of the present invention;
Fig. 9 is a timing chart showing operation timing of a magnetron in the microwave oven according to the third embodiment;
Fig. 10 is a timing chart showing microwave oscillation control carried out by the oven of the third embodiment;
Fig. 11 is a circuit diagram showing a microwave oven according to a fourth embodiment of the present invention;
Fig. 12 is a timing chart showing microwave oscillation control carried out by the oven of the fourth embodiment;
Figs. 13(a) and (b) are enlarged views respectively showing circles C-1 and C-2 of Fig. 12;
Fig. 14 is a circuit diagram showing a microwave oven according to a fifth embodiment of the present invention;
Fig. 15 is a timing chart showing microwave oscillation control carried out by the oven of the fifth embodiment;
Fig. 16 is a flowchart showing an example of arbitration control between a magnetron operation and a wireless communication operation, carried out by the oven of the fifth embodiment;
Fig. 17 is a flowchart showing another example of arbitration control between a magnetron operation and a wireless communication operation, carried out by the oven of the fifth embodiment;
Fig. 18 is a flowchart showing another example of arbitration control between a magnetron operation and a wireless communication operation, carried out by the oven of the fifth embodiment;
Fig. 19 is a flowchart showing another example of arbitration control between a magnetron operation and a wireless communication operation, carried out by the oven of the fifth embodiment;
Fig. 20 is a circuit diagram showing a standard iron-transformer-driven magnetron in a microwave oven;
Fig. 21 is a circuit diagram showing a standard inverter-driven magnetron in a microwave oven;
Fig. 22 is a graph showing the microwave generating characteristics of a standard magnetron in a microwave oven;
Fig. 23 shows active and inactive periods of the iron-transformer-driven magnetron;
Fig. 24 shows active and inactive periods of the inverter-driven magnetron;
Fig. 25 explains wireless packet communication according to the Bluetooth technology;
Fig. 26 shows a magnetron active period and a magnetron inactive period, i.e., a wireless communication possible period of the inverter-driven magnetron; and
Fig. 27 is a graph showing relationships among the instantaneous current values, oscillation frequencies, and noise level of a standard magnetron.

### DETAILED DESCRIPTION OF EMBODIMENTS

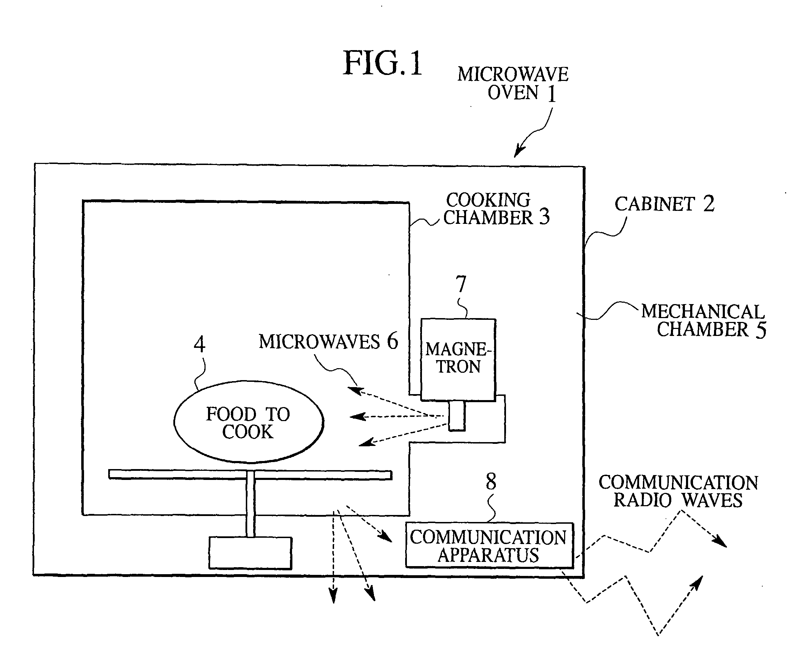

Figure 1 shows the structure of a microwave oven having a wireless communication apparatus according to the first embodiment of the present invention. The oven 1 has a metal cabinet 2 defining a cooking chamber 3. The cooking chamber 3 receives food 4 to be cooked by electromagnetic induction. To achieve this, a machine chamber 5 in the oven 1 has a magnetron 7 to generate microwaves 6 at a high-frequency band of 2.4 GHz to 2.5 GHz, and a controller (not shown). The oven 1 accommodates the communication apparatus 8 covered with a radio wave blocking metal case. The communication apparatus 8 carries out Bluetooth wireless communication at a frequency band of 2.402 GHz to 2.480 GHz.

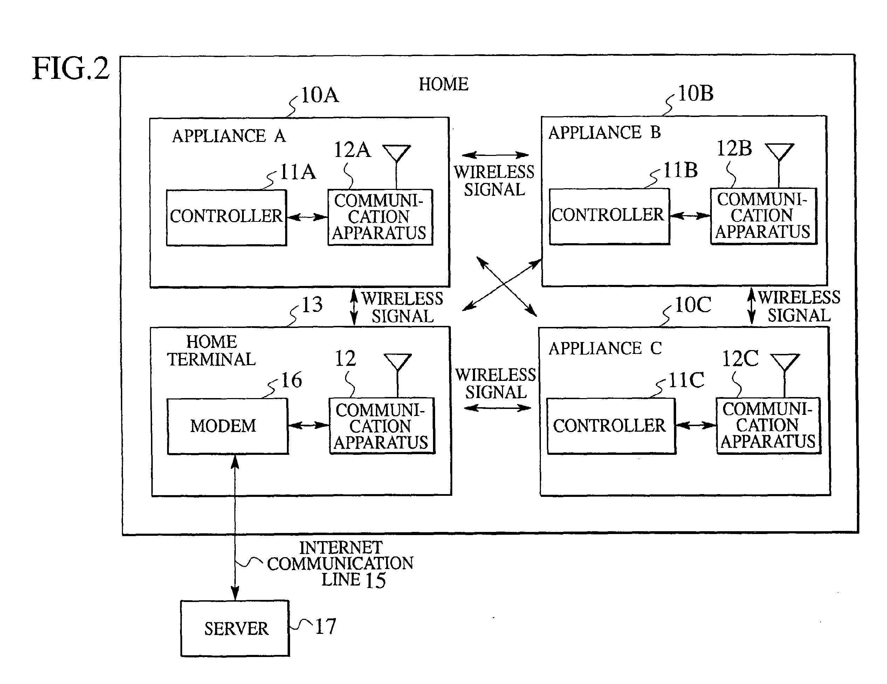

Figure 2 shows a home wireless communication network including the wireless communication apparatus 8. In the network of Fig. 2, home appliances 10A, 10B, and 10C are provided with controllers 11A, 11B, and 11C and wireless communication apparatuses 12A, 12B, and 12C each covered with a metal case. The network includes a home terminal 13.

The home terminal 13 has a wireless communication apparatus 12 and a modem 16 connected to an external Internet communication line 15. Through the line 15, the home terminal 13 communicates with a server 17. The server 17 may specify any one of the appliances 10A, 10B, and 10C, and the terminal 13 may send, by radio, a power ON/OFF command and a timer set signal to the specified appliance and may receive, by radio, power consumption data from the specified appliance. The appliances 10A, 10B, and 10C communicate necessary information among them by radio through the wireless communication apparatuses 12A, 12B, and 12C.

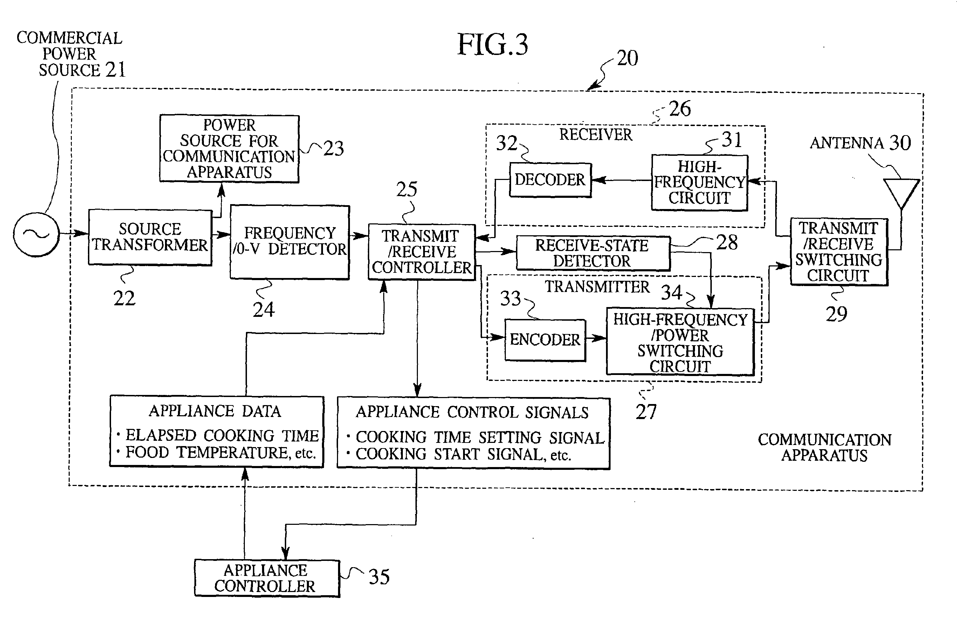

Figure 3 shows the structure of a wireless communication apparatus 20, which may be any one of the wireless communication apparatus of the microwave oven 1, home appliances 10A to 10C, and home terminal 13. The communication apparatus 20 operates according to the Bluetooth technology. A commercial power source 21 supplies power to a communication apparatus power source 23 through a source transformer 22. A frequency/O-V detector 24 determines whether the frequency of the commercial power source 21 is 50 Hz or 60 Hz and detects a zero-volt crossing point of the commercial power source 21.

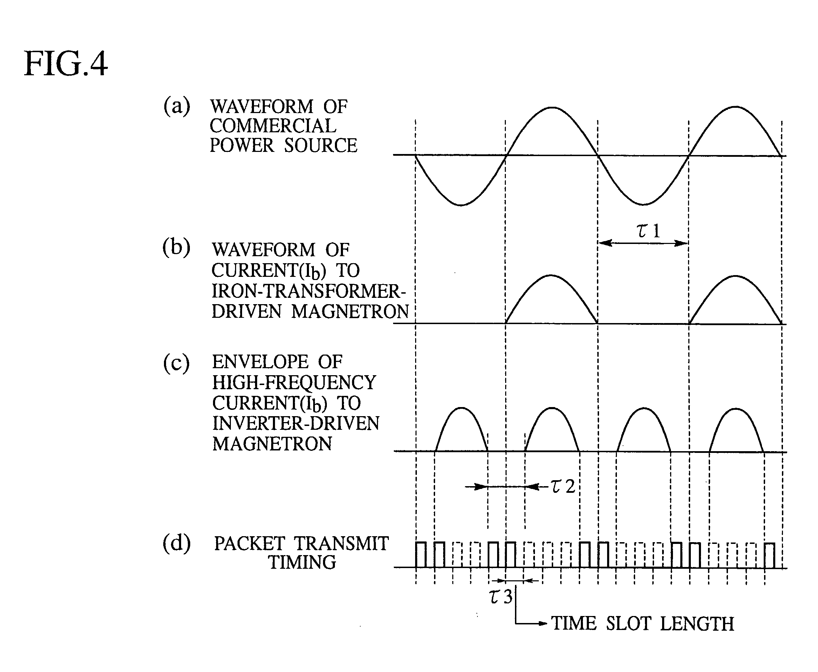

According to the detected zero-volt crossing point, a transmit/receive controller 25 determines the length of a packet time slot as a fraction of a half period τ1 and synchronizes the start of the time slot with a zero-volt crossing point of the commercial power source 21. Figure 4 shows relationships among packet transmit timing, the waveform of the commercial power source 21, and a magnetron current Ib.

If the magnetron 7 is an iron-transformer-driven magnetron, it provides a current waveform shown in Fig. 4(b) with a half wave occurring every half period of the waveform of the commercial power source 21 shown in Fig. 4(a). Magnetron current does not flow during the remaining half period τ1 and Bluetooth wireless communication is capable in this period τ1.

If the magnetron 7 is an inverter-driven magnetron, there is a magnetron inactive period τ2 shown in Fig. 4(c) with respect to the commercial power source waveform of Fig. 4(a). Magnetron current does not flow during the period τ2 and wireless packet communication is capable in this period τ2 as shown in Fig. 4(d). The transmit/receive controller 25 also controls the switching of hopping frequencies.

The wireless communication apparatus 20 of Fig. 3 has a receiver 26, a transmitter 27, a receive-state detector 28, and a transmit/receive switching circuit 29. An antenna 30 receives a high-frequency signal. In the receiver 26, a high-frequency circuit 31 detects the received signal and a decoder 32 extracts data from the received signal. The extracted data is supplied to the transmit/receive controller 25. In the transmitter 27, an encoder 33 generates a signal wave from data provided by the transmit/receive controller 25, and a high-frequency/power switching circuit 34 changes the signal wave into a high-frequency signal, which is radioed from the antenna 30. The high-frequency/power switching circuit 34 is capable of switching transmission power in the range of, for example, 1 mW to 100 mW.

The receive-state detector 28 detects a signal receiving state of the receiver 26 according to a signal from the transmit/receive controller 25. Upon detecting a poor signal receiving state, the receive-state detector 28 instructs the high-frequency/power switching circuit 34 to increase transmission power.

The transmit/receive controller 25 carries out wire communication with an appliance controller 35 of the home appliance in which the wireless communication apparatus 20 is installed. The transmit/receive controller 25 receives appliance data such as an elapsed cooking time and a food temperature (if the appliance is a microwave oven) from the appliance controller 35. According to an external control signal, the transmit/receive controller 25 sends a control signal to the appliance controller 35 to set a cooking time and start cooking. This configuration realizes remote control of the home appliance.

Wireless communication achieved by the wireless communication apparatus 20 according to the first embodiment will be explained. According to the embodiment, the wireless network of Fig. 2 includes the three home appliances 10A, 10B, and 10C and the home terminal 13 capable of accessing the external data server 17 through the Internet communication line 15. For example, the appliance 10A is a microwave oven, 10B a washing machine, and 10C a refrigerator. The communication apparatus 12 of the home terminal 13 and the communication apparatuses 12A, 12B, and 12C of the home appliances 10A, 10B, and 10C are each the wireless communication apparatus 20 of Fig. 3. The communication apparatus 12 of the home terminal 13 communicates, by radio, with the communication apparatuses 12A to 12C of the home appliances 10A to 10C, to receive the operating conditions of the appliances and remotely control them. The home appliances 10A to 10C communicate information among them through the communication apparatuses 12A to 12C and download necessary information from the data server 17 through the home terminal 13 and line 15.

The operation of the wireless communication apparatus 20 of Fig. 3 will be explained. The commercial power source 21 supplies power, through the source transformer 22, to the power source 23 serving for the communication apparatus 20. The frequency/O-V detector 24 determines whether the commercial power source 21 is of 50 Hz or 60 Hz and detects a zero-volt crossing point of the commercial power source 21. The transmit/receive controller 25 determines a time slot length τ3 for transmitting packets just as a fraction of a half period of the power source 21 according to the detected zero-volt crossing point and synchronizes the start of the time slot with a zero-volt crossing point of the commercial power source 21 as shown in Fig. 4.

If the wireless communication is based on the direct frequency spreading technique with the magnetron involved in the embodiment being an iron-transformer-driven magnetron and a communication channel overlapping a main operating frequency (Fig. 27) of the magnetron, the wireless communication is achievable only during an inactive period of the magnetron. If the wireless communication is based on the frequency hopping technique, on the other hand, the wireless communication is unachievable only when the communication and magnetron frequencies stochastically overlap. Therefore, even during the operation of the magnetron, most frequencies are available for wireless communication, to improve communication efficiency.

In the wireless communication apparatus 20 installed in the microwave oven, the transmit/receive controller 25 fetches data such as an elapsed cooking time and a food temperature from the appliance controller 35. The encoder 33 encodes the fetched data into digital data, which is packed into communication packets. The high-frequency/power switching circuit 34 determines a transmission frequency for each time slot to transmit the packets. The transmit/receive switching circuit 29 supplies power to the antenna 30, which transmits a radio signal carrying the packets.

The transmitted packets are received by one of the wireless communication apparatuses (20) serving as a receiver. If no data error occurs, the transmit side receives a data acknowledge signal (ACK) from the receiver in the next time slot, to complete the wireless communication.

The receive-state detector 28 monitors the signal receiving state of the receiver 26 through the transmit/receive controller 25. If no data acknowledge signal (ACK) is received after transmitting packets, the receive-state detector 28 instructs the high-frequency/power switching circuit 34 to resend the same packets. If no data acknowledge signal is received after a predetermined number of resending operations and if the packet transmission is carried out with a plurality of time slots, the number of time slots is reduced and several resending operations are tried. If the packet transmission is carried out in the 5-slot mode, the resending operations will be carried out in the 3-slot mode. If no data acknowledge signal is received after the resending operations, the number of time slots is further reduced to the 1-slot mode to try resending operations. In this way, communication modes are automatically switched to find an optimum one.

If communication is unsuccessful under the minimum time slot mode, the receive-state detector 28 instructs the high-frequency/power switching circuit 34 to increase transmission power. In this way, the first embodiment automatically increases transmission power to successfully achieve wireless communication under the minimum time slot mode, if the magnetron of the microwave oven is operating and if microwave noise from the magnetron interferes with the wireless communication. In normal communication with the oven not operating, the first embodiment carries out wireless communication at low power, to reduce power consumption.

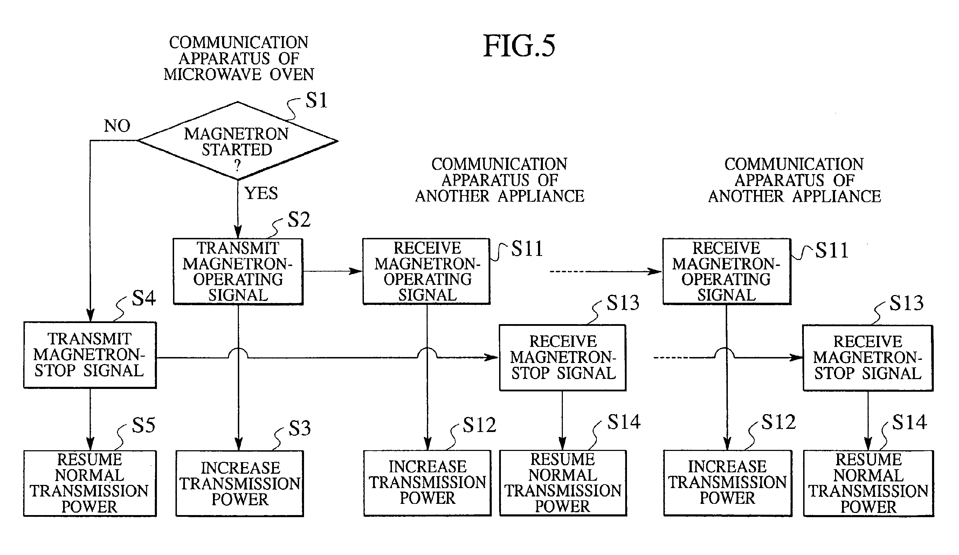

Figure 5 is a flowchart showing a control process to increase transmission power while the microwave oven is operating. In step S1, the receive-state detector 28 of the wireless communication apparatus 20 in the oven checks to see if the magnetron of the oven is operating according to a signal from the appliance controller 35 received through the transmit/receive controller 25. If the magnetron is operating to oscillate microwaves, the receive-state detector 28 sends a magnetron-operating signal in step S2 and increases transmission power in step S3. If the magnetron is stopped, the receive-state detector 28 sends a magnetron-stop signal in step S4 and resumes normal transmission power in step S5. Any other wireless communication apparatus (for example, the one in the home terminal or any other home appliance) receives the magnetron-operating or magnetron-stop signal in step S11 or S13 from the communication apparatus installed in the oven and carries out transmission power control in step S12 or S14 according to the received signal.

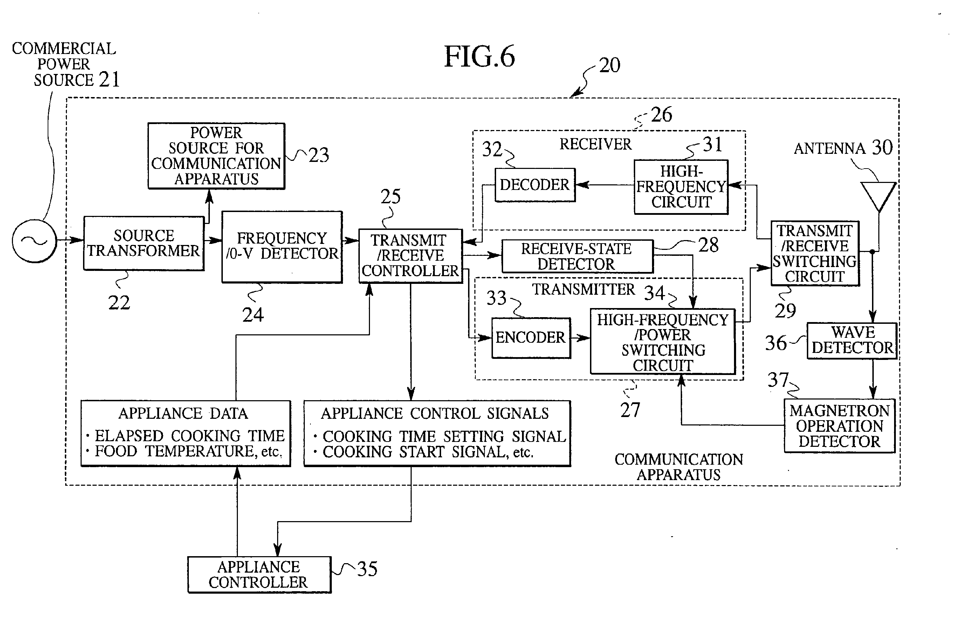

Figure 6 shows a wireless communication apparatus 20 according to the second embodiment of the present invention. This wireless communication apparatus is characterized by detecting leakage radio waves from a microwave oven. Namely, the wireless communication apparatus 20 according to the second embodiment has a wave detector 36 for detecting the waveform of a signal received by an antenna 30 and a magnetron operation detector 37 for detecting the operation of a magnetron of a microwave oven according to the detected waveform and providing the detected magnetron operation to a high-frequency/power switching circuit 34. The other elements of the second embodiment are the same as those of the first embodiment of Fig. 3, and therefore, are represented with like reference numerals.

According to the second embodiment, the antenna 30 receives strong leakage radio waves from a magnetron of a microwave oven, if any. The wave detector 36 detects a waveform of the received signal. According to the detected waveform, the magnetron operation detector 37 determines whether or not the leakage radio waves affects wireless communication and provides a determination result to the high-frequency/power switching circuit 34.

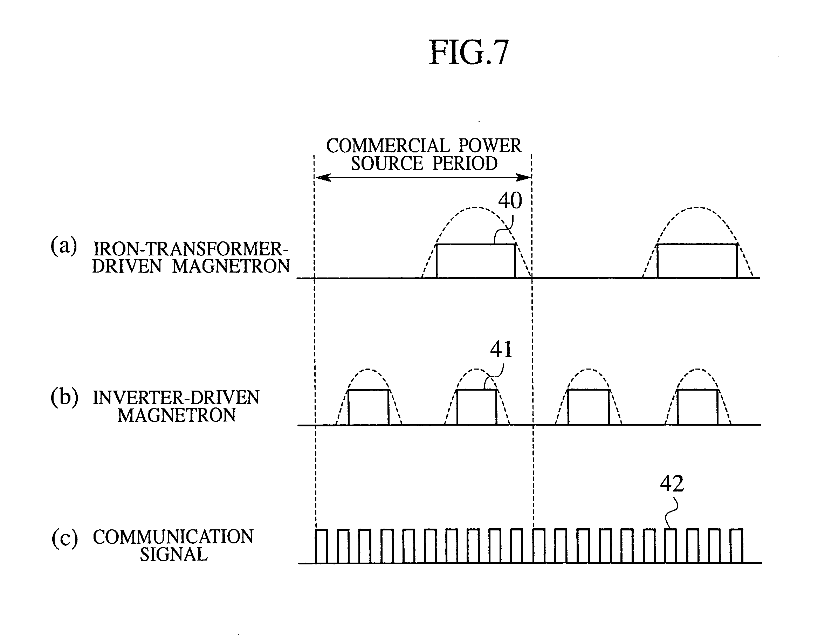

The waveform detected by the wave detector 36 will be an envelope shown in Fig. 7(a) if the magnetron that has caused the leakage radio waves is an iron-transformer-driven magnetron and will be an envelope shown in Fig. 7(b) if the magnetron is an inverter-driven magnetron.
The detected waveform is passed through a limiter to provide a wide waveform 40 or 41 according to the magnetron type. A normal communication signal provides a thin pulse waveform 42 of Fig. 7(c).

The magnetron operation detector 37 measures the pulse width of the waveform 40, 41, or 42 provided by the wave detector 36 and determines whether or not the detected waveform is of a communication signal or of a leakage microwave.

If the magnetron operation detector 37 determines that there is an operating magnetron, the high-frequency/power switching circuit 34 increases transmission power by a predetermined quantity.

In this way, the second embodiment realizes wireless communication among wireless communication apparatuses incorporated in home appliances spaced from a microwave oven. The home appliances may fail to receive a magnetron-operating signal from a wireless communication apparatus installed in a microwave oven, or no such a magnetron-operating signal may be used. Then, according to the second embodiment, the wireless communication apparatus of each home appliance executes the magnetron detecting operation to determine whether or not there is a magnetron that is generating microwaves. If there is, the wireless communication apparatus in each home appliance switches to a packet communication mode involving a reduced number of time slots, or increases transmission power, to continue wireless communication during the operation of the magnetron.

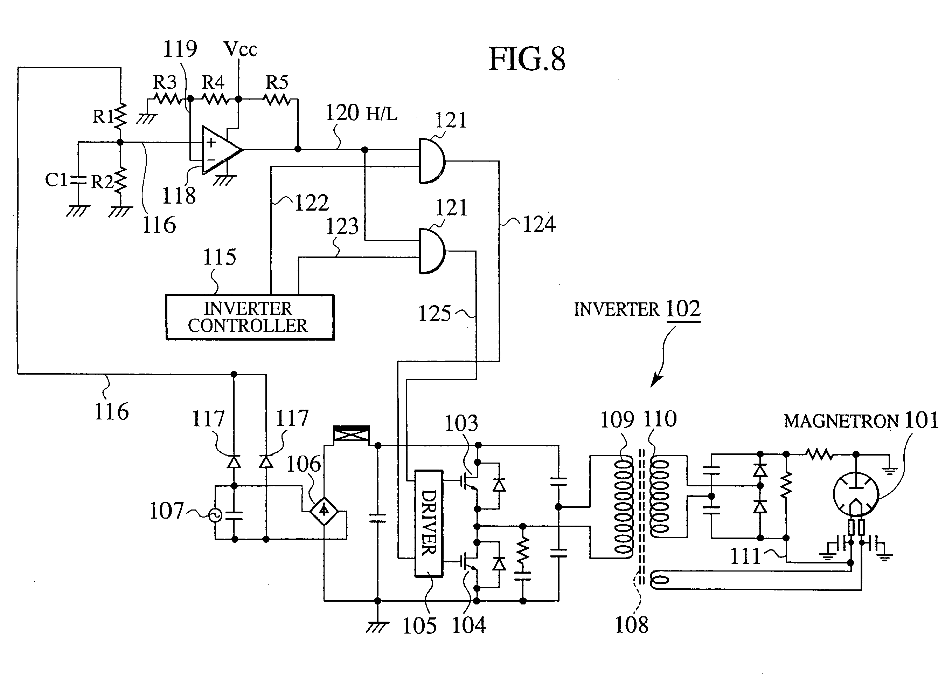

Figure 8 is a circuit diagram showing a microwave oven employing an inverter-driven magnetron according to the third embodiment of the present invention. The oven includes the magnetron 101, an inverter 102, switching elements such as IGBTs 103 and 104, a switching driver 105, a full-wave rectifier 106, a commercial power source 107, and a high-frequency transformer 108. The commercial power source 107 provides power, which is full-wave-rectified by the full-wave rectifier 106. The switching driver 105 controls the gates of the switching elements 103 and 104, to generate high-frequency power, which is supplied to a primary coil 109 of the high-frequency transformer 108 to increase voltage. A secondary coil 110 of the transformer 108 provides voltage-increased high-frequency power to the magnetron 101, which generates microwaves.

The switching driver 105 is controlled by an inverter controller 115. The inverter controller 115 stops the switching operation of the inverter 102 during a predetermined time around zero crossing timing of the commercial power source 107, thereby stopping the generation of microwaves. This control operation will be explained in detail.

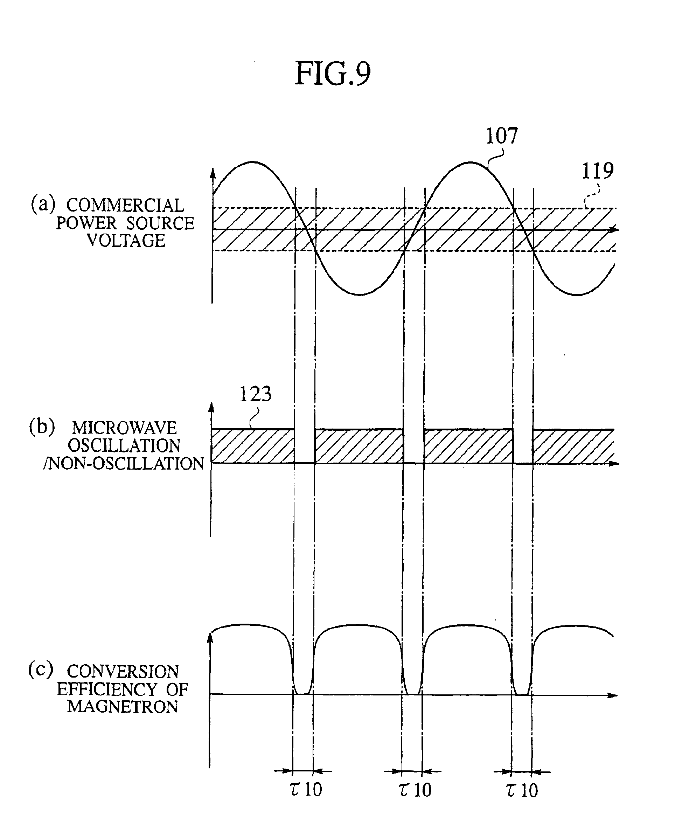

Figure 9 is a timing chart showing an operation timing of the magnetron 101 of Fig. 8. Figure 9(c) shows the conversion efficiency of the magnetron 101. Figure 9(a) shows the voltage of the commercial power source 107. If the voltage of the commercial power source 107 is within a predetermined range 119 around a 0-V level, the magnetron 101 causes no oscillation as shown in Fig. 9(b). Namely, the magnetron 101 generates no microwaves within an inactive period τ10.

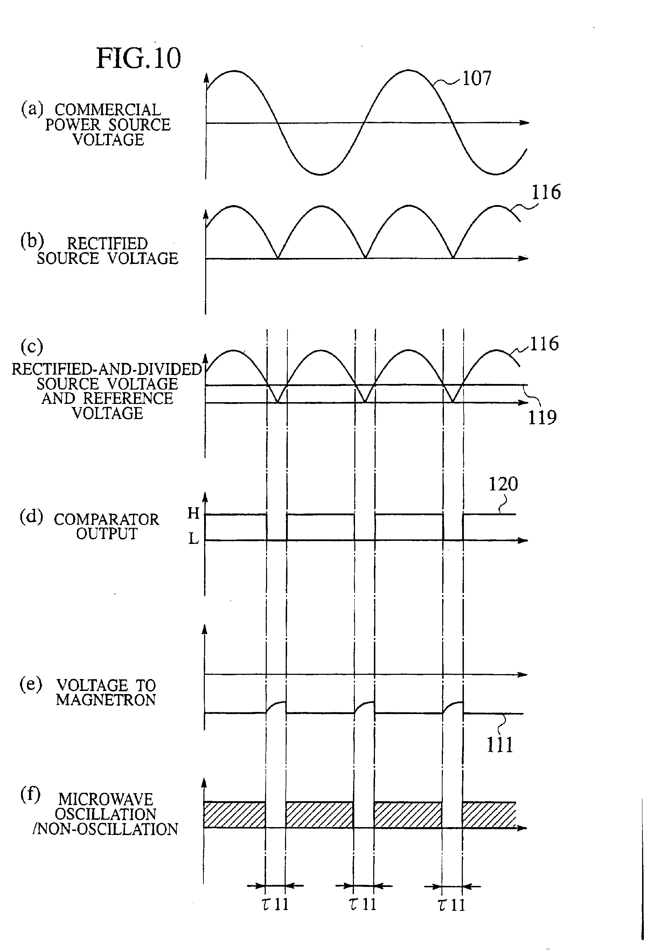

The microwave oven according to the third embodiment utilizes the operating characteristics of the magnetron 101. Namely, it positively uses the inactive period τ10 or a longer period τ11 to carry out wireless communication at a frequency band equivalent to a frequency band of the magnetron 101. Figure 10 is a timing chart showing the operation of the inverter controller 115 according to the third embodiment.

In the circuit shown in Fig. 8, the voltage of the commercial power source 107 shown in Fig. 10(a) is rectified by rectifier elements 117 into a full-wave rectified voltage. 116 as shown in Fig. 10(b). As shown in Fig. 10(c), this rectified voltage 116 is divided by a fixed ratio determined between voltage-dividing resistors R1 and R2 (hereinafter, this rectifed-and-divided voltage is also called the source voltage 116), and supplied to a comparator 118. The comparator 118 compares the rectified-and-divided voltage 116 with a reference threshold voltage 119 and provides an output signal 120 shown in Fig. 10(d). The output signal 120 is high when the source voltage 116 is higher than the reference voltage 119 and is low when the source voltage 116 is lower than the reference voltage 119. Logic circuits 121 shown in Fig. 8 provide logical products of the output signal 120 from the comparator 118 and switching control signals 122 and 123 from the inverter controller 115. The logical products are switching control signals 124 and 125 to the switching driver 105 as shown in Fig. 8.

A voltage 111 shown in Fig. 10(e) is applied to the magnetron 101, which operates as shown in Fig. 10(f). In this way, the magnetron 101 is positively stopped in the period τ11 (>= τ10) around a zero-volt crossing point of the commercial power source 107. The length of the period τ11 is properly set according to wireless communication specifications employed. According to the Bluetooth technology, the period τ11 must be at least 2 ms, and therefore, a voltage corresponding to the period τ11 is set as the reference voltage 119 for the comparator 118. The reference voltage 119 may be adjusted to set a proper wireless communication period τ11 around the magnetron inactive period τ10 which is shown in Fig. 9(c).

The microwave oven according to the third embodiment shown in Fig. 8 employs the inverter 102 to produce high-frequency power from the commercial power source 107 and supplies the high-frequency power to the magnetron 101. The inverter controller 115 stops the output of the magnetron 101 for a predetermined period τ11 around a zero-volt crossing point of the commercial power source 107. During the magnetron inactive period τ11, wireless communication is achievable at a frequency band equivalent to the frequency band of the magnetron 101. Even during the operation of the magnetron 101, the third embodiment is capable of surely carrying out Bluetooth wireless communication at a frequency band equivalent to the frequency band of the magnetron 101 between the wireless communication apparatus installed in the oven and wireless communication apparatuses installed in other home appliances, or between the wireless communication apparatuses in the home appliances without interrupting or spoiling a cooking (heating) operation carried out in the oven.

According to the third embodiment, the reference voltage 119 may be changed in proportion to a peak value of the voltage 116 of the commercial power source 107. This may substantially maintain the rise and fall timing of the output 120 of the comparator 118 irrespective of fluctuations in the source voltage 116. This results in keeping the magnetron inactive period τ11 at a constant value irrespective of fluctuations in the source voltage 116. To achieve this, the full-wave-rectified source voltage 116 made from the commercial power source 107 is accumulated in a capacitor. The voltage of the capacitor is divided by a voltage dividing resistor at a given ratio, to provide a reference voltage. The discharge time constant of the capacitor must be sufficiently longer than a period of the power source and must substantially be unchanged within the power source period.

There is another technique of setting the magnetron inactive period τ11 around a zero-volt crossing point of the source voltage 116. The technique is a digital technique to count reference pulses with a microcomputer and provide the period τ11 . The digital technique, however, is unable to start the period τ11 before a detected zero-volt crossing point. In this case, the period τ11 is set to start before the next zero-volt crossing point that comes after the detected zero-volt crossing point. For example, if the power source 107 is of 50 Hz, a signal of 2 ms long is generated 9 ms after the detection of a zero-volt crossing point in the source voltage 116, and the generated signal is used as the signal 120 to inactivate the magnetron 101 for 2 ms around a zero-volt crossing point of the source voltage 116.

Inactivating the magnetron 101 for the period τ11 is not limited to specific techniques. Any technique is employable if it can inactivate the oscillation operation of the magnetron 101 when the output 120 of the comparator 118 becomes low. For example, ON/OFF operations of the switching elements 103 and 104, which apply a high-frequency voltage to the primary coil 109 of the high-frequency transformer 108, can be suspended to restrict the generation of a high voltage on the secondary coil 110 by magnetic coupling in the high-frequency transformer 108. A separate switch may be arranged to cut the conduction of the primary coil 109. An ON time of the switching elements 103 and 104 may be shortened to decrease a voltage to the magnetron 101 below an oscillation start voltage. Shortening the ON time of the switching elements 103 and 104 is more advantageous than stopping the ON/OFF operations thereof in reducing beat noise of the high-frequency transformer 108 caused by a sudden change in inverter operation.

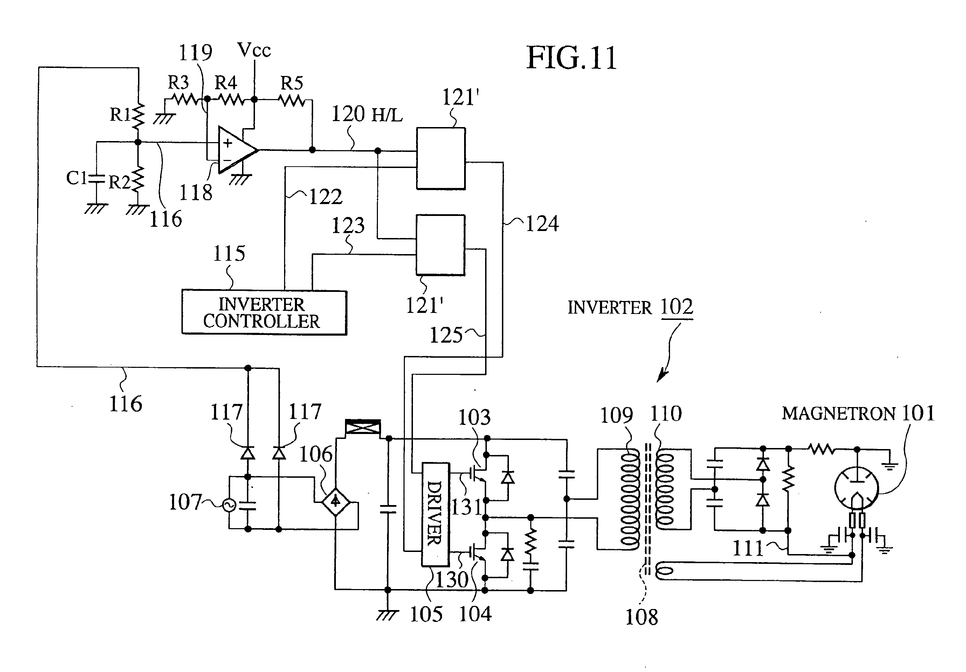

Figure 11 shows a microwave oven according to the fourth embodiment of the present invention. According to the microwave oven of the third embodiment of Fig. 8, the switching elements 103 and 104 apply a high-frequency voltage to the primary coil 109 of the high-frequency transformer 108. When these switching elements 103 and 104 are turned on, a current flows through the primary coil 109. At this time, if the output 120 of the comparator 118 becomes low, the current flowing through the primary coil 109 is suddenly stopped to cause a switching loss due to, for example, a phase shift between current and voltage. To reduce the switching loss, the switching elements 103 and 104 may be turned on and off when the primary coil 109 passes no current.

The third embodiment of Fig. 8 forcibly stops power supply to the magnetron 101 according to the value of the voltage 116 of the commercial power source 107. Namely, the third embodiment has a possibility of stopping a current passing through the primary coil 109 without regard to the ON/OFF timing of the switching elements 103 and 104. Accordingly, the third embodiment has a possibility of causing an unignorable switching loss. In addition, forcibly stopping a current in the primary coil 109 increases noise.

The microwave oven according to the fourth embodiment is an improvement of that of the third embodiment. The fourth embodiment forcibly stops power supply to the magnetron 101 according to the value of the voltage 116 of the commercial power source 107 in synchronization with the ON/OFF timing of the switching elements 103 and 104, to reduce switching loss and noise.

The microwave oven according to the fourth embodiment will be explained with reference to Fig. 11. Instead of the logic circuits 121 of Fig. 8, the fourth embodiment employs logic circuits 121'. The other elements of Fig. 11 are the same as those of Fig. 8, and therefore, are represented with like reference numerals.

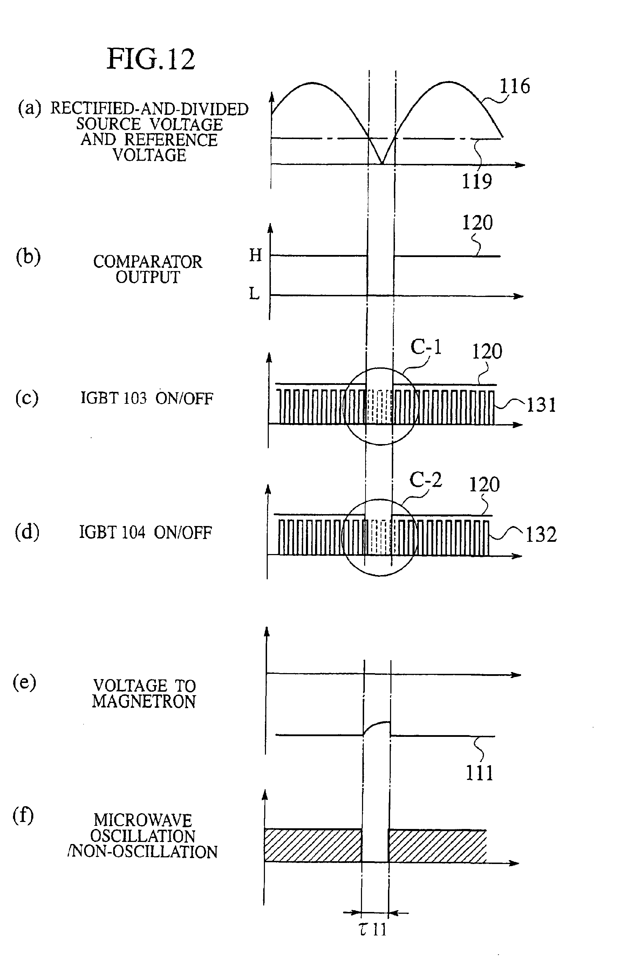

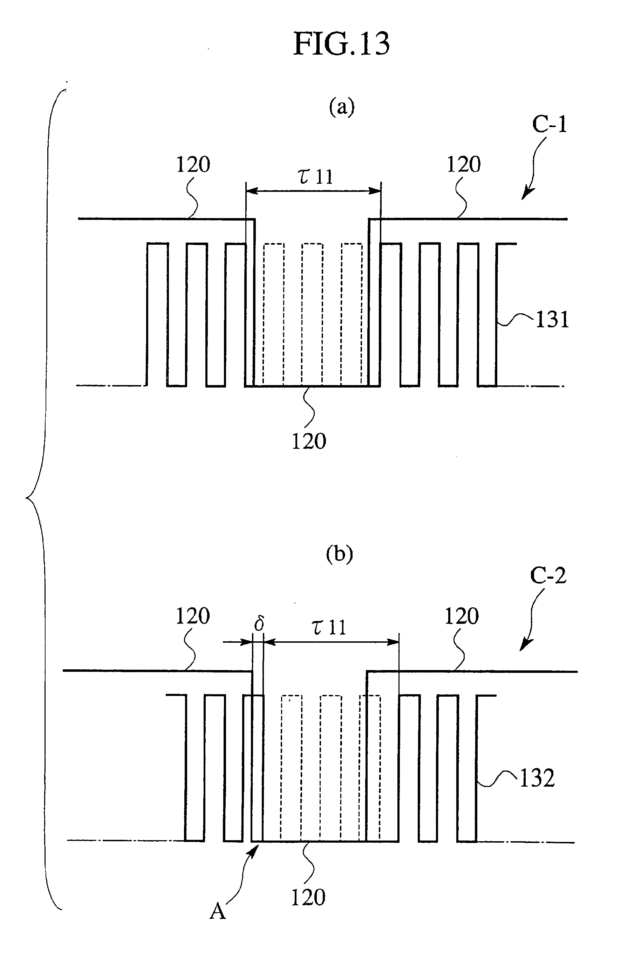

Figures 12 and 13 show the operating characteristics of the logic circuits 121'. A commercial power soUrce 107 is rectified by rectifiers 117 into a full-wave rectified voltage (or a divided voltage, if required) 116 shown in Fig. 12(a). The voltage 116 is compared with a reference voltage 119 in a comparator 118, which provides an output signal 120 shown in Fig. 12(b). The output signal 120 is high if the power source voltage 116 is higher than the reference voltage 119 and low if the power source voltage 116 is lower than the reference voltage 119.

The logic circuits 121' provide logical products of the output signal 120 from the comparator 118 and switching control signals 122 and 123 from an inverter controller 115 as shown in Fig. 11. The logical products are switching control signals 124 and 125 to a switching driver 105. In Figs. 12(c), 12(d), 13(a), and 13(b), the logic circuits 121' provide the switching control signals 124 and 125 so that the timing of forcibly stopping power supply in response to a voltage change in the commercial power source 107 is synchronized with gate signals 131 and 132 to turn on and off the switching elements 103 and 104. At a point indicated with an arrow mark A of Fig. 13(b), a fall of the gate signal 132 is behind a fall of the output 120 of the comparator 118 by δ. In this case, the logic circuit 121' delays the fall of the output 120 by δ to align it with the fall of the gate signal 132 and provide a gate stop signal for a specified period τ11.

A voltage 111 applied to a magnetron 101 is shown in Fig. 12(e), and the magnetron 101 operates as shown in Fig. 12(f). Namely, the magnetron 101 is positively inactivated for the period τ11 (>= τ10) around a zero-volt crossing point of the commercial power source 107. According to the fourth embodiment, the switching elements 103 and 104 of the inverter 102 are turned off to stop the inverter 102 in synchronization with the original OFF timing of the switching elements 103 and 104 and are turned on to activate the inverter 102 in synchronization with the original ON timing of the switching elements 103 and 104. Namely, the fourth embodiment forcibly inactivates the magnetron 101, to achieve wireless communication for the period τ11 without suddenly stopping current to the inverter 102. The forth embodiment suppresses beat noise and smoothly activates/inactivates the magnetron 101.

According to the fourth embodiment, the inverter 102 has a half-bridge structure. The fourth embodiment may employ a quasi-E-class inverter. According to the fourth embodiment, the secondary circuit of the high-frequency transformer 108 may be of a full-wave rectification type or a half-wave rectification type.

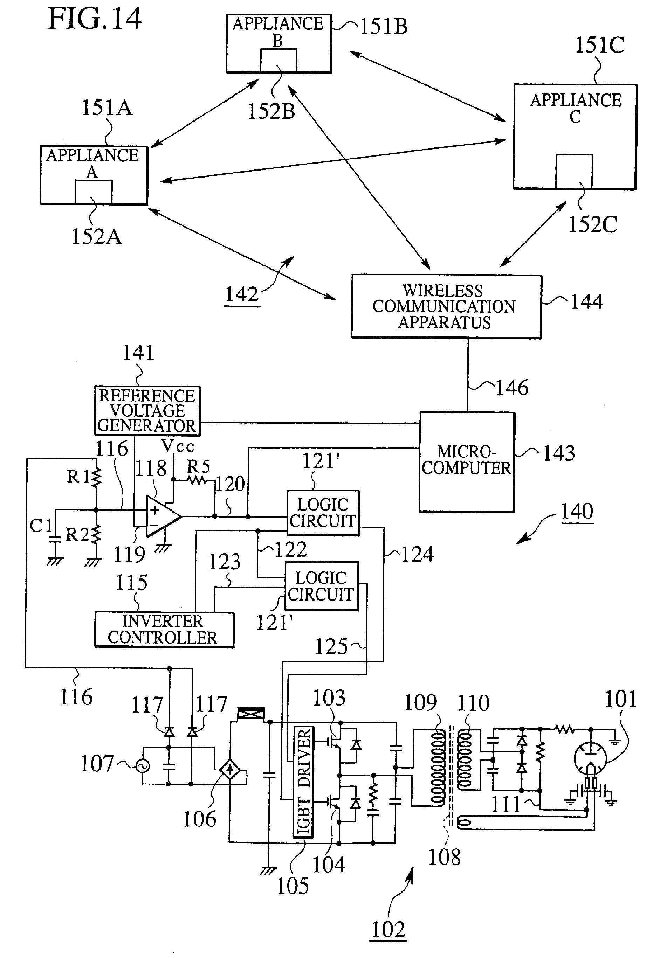

Figure 14 shows a microwave oven according to the fifth embodiment of the present invention. In wireless communication, packet specifications determine a minimum unit communication time. To secure the minimum unit communication time during the operation of a magnetron, the length of a magnetron inactive period synchronized with a commercial power source frequency is measured and it is determined if the measured inactive period is sufficient to secure the minimum unit communication time. If the measured inactive period is insufficient to secure the minimum unit communication time, it must be secured by, for example, changing a reference voltage. Measuring the length of a magnetron inactive period and securing a magnetron inactive period longer than a minimum unit communication time guarantee stabilized wireless communication.

The microwave oven 140 of Fig. 14 according to the fifth embodiment has a function of securing such a minimum unit communication time. Compared with the oven of the fourth embodiment of Fig. 11, the oven 140 of the fifth embodiment additionally has a reference voltage generator 141 that variably sets a reference voltage 119 for a comparator 118, and a control microcomputer 143 to communicate with a wireless communication network 142 and control the reference voltage generator 141.

The oven 140 also has a wireless communication apparatus 144 connected to the microcomputer 143. The wireless communication apparatus 144 is connected to wireless communication apparatuses 152A, 152B, and 152C incorporated in home appliances 151A, 151B, and 151C, respectively, through the wireless communication network 142. The wireless communication apparatus 144 sends a signal 146 informing communication conditions to the microcomputer 143. The other elements of the fifth embodiment are the same as those of the fourth embodiment, and therefore, are represented with like reference numerals.

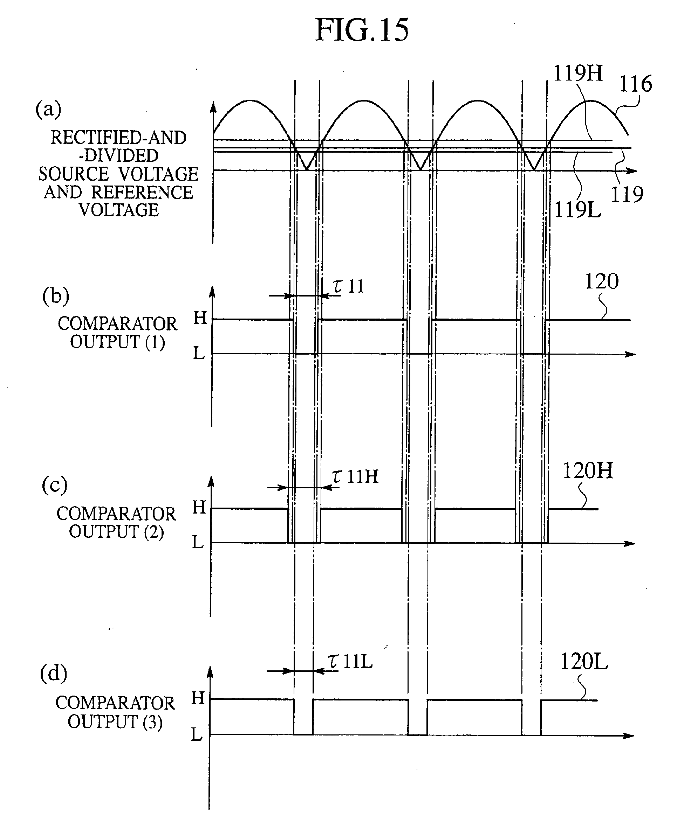

The microcomputer 143 monitors an output signal 120 from the comparator 118 and measures a period in which the output signal 120 is low, i.e., a magnetron inactive period. If required, the microcomputer 143 instructs the reference voltage generator 141 to increase or decrease the reference voltage 119. In response to the instruction, the reference voltage generator 141 changes the reference voltage 119 supplied to the comparator 118. In this way, the microcomputer 143 controls the magnetron inactive period to a specified length. For example, setting a higher reference voltage 119H than the normal reference voltage 119 as shown in Fig. 15(a) defines a low period τ11H of a comparator output 120H as shown in Fig. 15(c). The low period τ11H is longer than a normal low period τ11 shown in Fig. 15(b), to extend the inactive period of a magnetron 101. Setting a lower reference voltage 119L than the normal reference voltage 119 as shown in Fig. 15(a) defines a low period τ11L of a comparator output 120L as shown in Fig. 15(d). The low period τ11L is shorter than the normal low period τ11, to shorten the inactive period of the magnetron 101.

The microcomputer 143 carries out the above-mentioned control of changing the reference voltage 119 according to the signal 146 informing communication conditions between the wireless communication apparatus 144 incorporated in the microwave oven 140 and the wireless communication apparatuses 152A, 152B, and 152C incorporated in the home appliances 151A, 151B, and 151C and connected to the communication apparatus 144 through the network 142.

In wireless communication, packet specifications determine a minimum unit communication time. One communication technology may involve several communication modes of different time periods. For example, the Bluetooth technology includes the 1-slot mode, 3-slot mode, and 5-slot mode involving different packet specifications. The 1-slot mode uses one slot to send packets, the 3-slot mode uses three slots to send packets, and the 5-slot mode uses five slots to send packets. The 5-slot mode is capable of sending a larger quantity of data each time to increase communication speed. However, it needs a longer minimum unit communication time. Depending on packet specifications used, the length of a magnetron inactive period must be adjusted to properly carry out wireless communication.

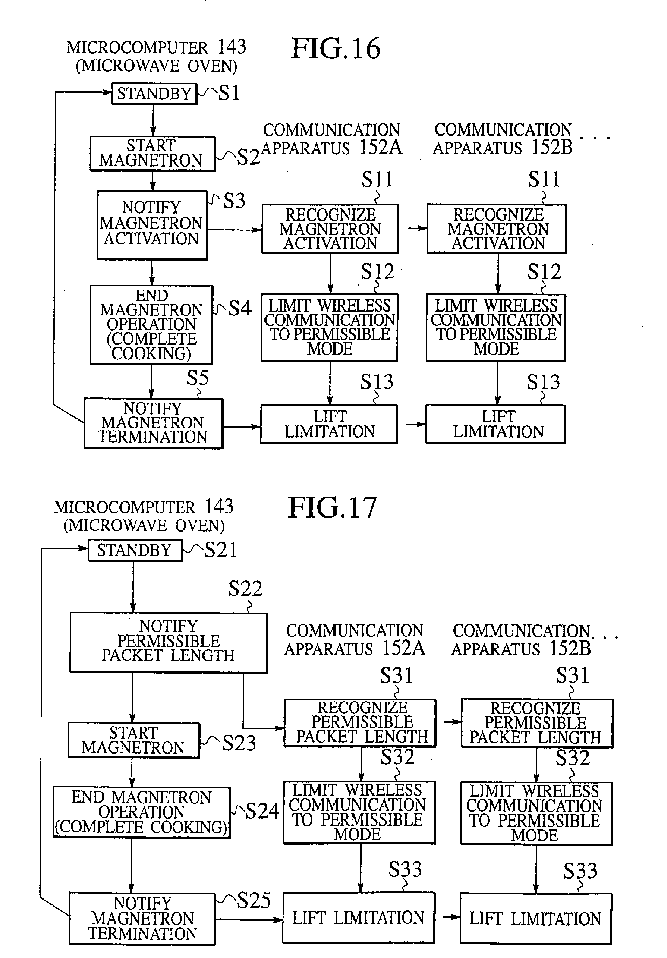

Figure 16 is a flowchart showing a control operation of the microwave oven 140 carried out by the microcomputer 143. The oven 140 and home appliances 151A, 151B, and 151C are installed in a house and share information through the wireless communication network 142. Wireless communication is carried out among the home appliances or between the oven 140 and the home appliances. If the magnetron 101 of the oven 140 is stopped, the wireless communication is achievable at a 100% speed. If the magnetron 101 is active to generate microwaves, wireless communication will be suspended, and only in a short magnetron inactive period, the wireless communication will be resumed. This intermittent wireless communication deteriorates communication performance.

In step S1, the oven 140 is in a standby state. In step S2, the oven 140 starts the magnetron 101. In step S3, the oven 140 notifies the other appliances of magnetron activation, i.e., microwave oscillation through the wireless communication apparatus 144.

In step S11, the wireless communication apparatuses 152A, 152B, and 152C of the home appliances receive the notification, and in step S12, decease a communication speed and start intermittent communication to stabilize wireless communication during the magnetron operation. In step S4, the oven 140 stops the magnetron 101, and in step S5, notifies the other appliances of the termination of the magnetron operation, i.e., the completion of microwave oscillation. In step S13, the wireless communication apparatuses 152A, 152B, and 152C resume the 100%-speed wireless communication.

Figure 17 is a flowchart showing another arbitration control operation carried out by the microcomputer 143 of the microwave oven 140 of Fig. 14. If the magnetron 101 of the oven 140 is operating to generate microwaves, communication between the wireless communication apparatus 144 of the oven 140 and those of the other appliances is usually interrupted. Then, it is difficult to receive the notification that the magnetron 101 is operating. This is because, once the oven 140 starts the magnetron 101, the communication network 142 and communication among the home appliances are hindered.

In step S21 of Fig. 17, the magnetron 101 of the oven 140 is in a standby state. In step S22, the oven 140 prepares to start the magnetron 101 and a cooking (heating) operation. At this time, the microcomputer 143 determines a permissible packet length at which wireless communication is possible during the cooking operation according to the length of an inactive period of the magnetron 101.
Then, the microcomputer 143 uses the wireless communication apparatus 144 to notify the wireless communication apparatuses 152A, 152B, and 152C of the permissible packet length. In step S31, the wireless communication apparatuses receive the notification, recognize the permissible packet length, and in step S32, limit their wireless communication to the permissible packet length.

In step S23, the oven 140 starts the cooking operation by starting the magnetron 101. In step S24, the oven 140 completes the cooking operation. In step S25, the microcomputer 143 uses the wireless communication apparatus 144 to notify the wireless communication apparatuses 152A, 152B, and 152C of the completion of the cooking operation. In step S33, the wireless communication apparatuses 152A, 152B, and 152C receive the notification, lift the limit on the communication mode, and resume wireless communication at a fastest speed.

This embodiment enables the microwave oven 140 and other home appliances to continue wireless communication at a lowered speed even during a cooking operation.

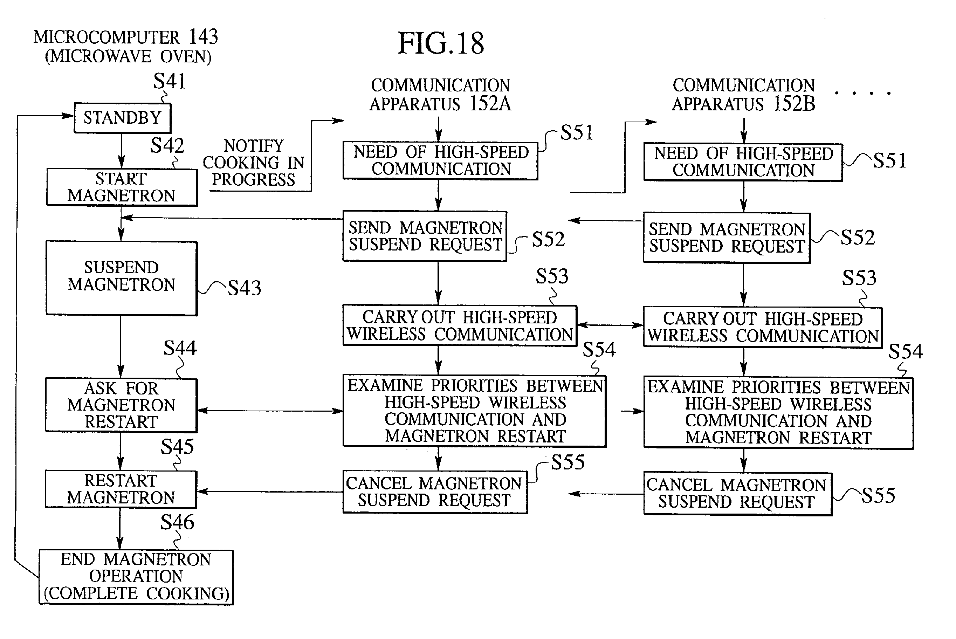

Figure 18 is a flowchart showing another arbitration control operation carried out by the microcomputer 143 of the microwave oven 140 of Fig. 14. The commercial power source 107 has a frequency of 60 Hz or 50 Hz. When controlling the microwave oscillating operation of the magnetron 101 in synchronization with the frequency of the commercial power source 107, it is impossible to extend a magnetron inactive period longer than a half-wave length (about 8.3 ms if the power source frequency is 60 Hz) of the power source 107. Namely, it is difficult to stably carry out a communication mode that takes a longer time than the half-wave period. When communicating images, voice, or moving pictures at high speed between the home appliances or between the oven 140 and the home appliances, it is required to choose a cooking operation by the oven 140 or the high-speed wireless communication according to their priorities. If voice must be communicated between the home appliances in real time, the home appliances send a suspend request to the oven 140. If the oven 140 is ready to accept the request, it temporarily suspends the cooking operation, i.e., the microwave oscillating operation of the magnetron 101.

In step S41 of Fig. 18, the oven 140 is in a standby state. In step S42, the oven 140 starts the magnetron 101 to oscillate microwaves. At this time, the microcomputer 143 uses the wireless communication apparatus 144 to notify the wireless communication apparatuses 152A, 152B, and 152C of the activation of the magnetron 101. Upon receiving the notification, the wireless communication apparatuses 152A, 152B, and 152C of the home appliances recognize that the oven 140 is in a cooking operation, and therefore, continue wireless communication at a slower communication speed during the cooking operation.

In step S51, any one of the wireless communication apparatuses 152A, 152B, and 152C wants to carry out high-speed communication, and in step S52, sends a microwave oscillation suspend request, i.e., a magnetron suspend request to the oven 140.

In step S43, the microcomputer 143 of the oven 140 receives the request, examines the suspend request, a cooking state, a cooking mode, etc., and determines whether a priority must be given to the cooking operation or to the suspend request. If the cooking operation is suspendible, or if the suspend request is urgent, the microcomputer 143 accepts the request and suspends the operation of the magnetron 101.

In step S53, the home appliance that has sent the suspend request starts high-speed wireless communication irrespective of whether or not the request is accepted. If the request is not accepted, the high-speed wireless communication will fail due to an interference of microwave noise, and therefore, the high-speed communication will be retried.

In step S44, the microcomputer 143 of the oven 140 uses the wireless communication apparatus 144 to periodically ask the home appliances whether or not the suspended magnetron operation can be resumed. In step S54, the wireless communication apparatuses of the home appliances determine whether the priority must be given to the high-speed communication or to the resumption of the magnetron operation. If it is determined that the high-speed communication must be continued, the determination is informed to the microcomputer 143 and the high-speed communication is continued. If it is determined that the magnetron operation must be resumed, a cancellation of the magnetron suspend request is notified to the microcomputer 143 in step S55.

In steps S45 and S46, the microcomputer 143 receives the cancellation notice of the suspend request and resumes the operation of the magnetron 101 to complete the cooking operation.

In this way, this embodiment enables wireless communication between the oven 140 and the wireless communication apparatuses of the other home appliances even during a cooking operation by the oven 140 by selecting an optimum operation according to the priorities of operations among the oven 140 and appliances.

According to the related arts, operating a microwave oven results in stopping communication in a wireless communication network involving different home appliances. On the other hand, the present invention enables wireless communication at least at a minimum speed even during a cooking operation by the oven 140 and achieves an operation having a highest priority among the operations of the oven 140 and other home appliances connected to the wireless communication network 142.

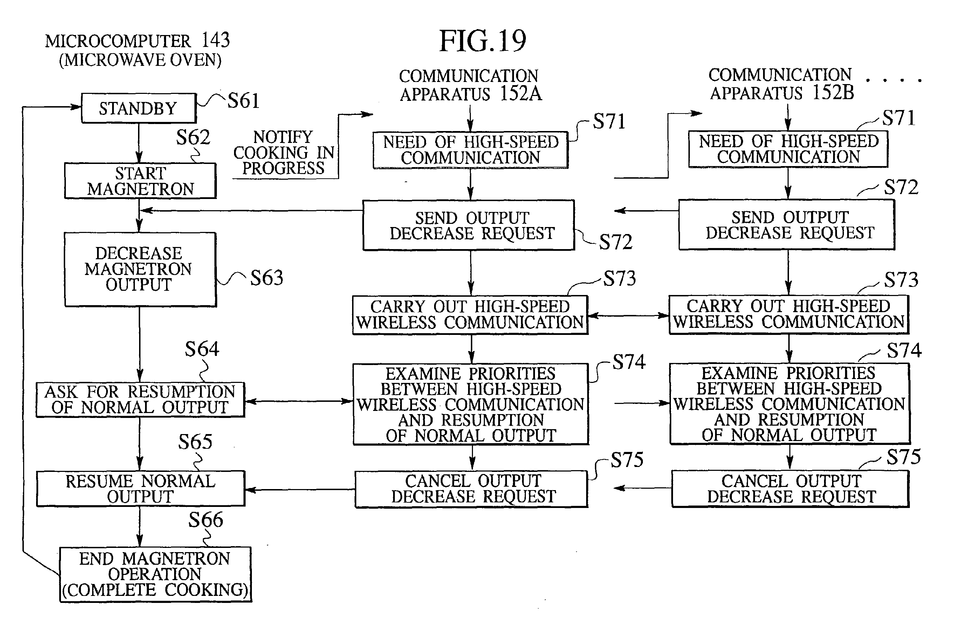

Figure 19 is a flowchart showing another arbitration control operation carried out by the microcomputer 143 of the microwave oven 140 of Fig. 14. According to the arbitration control shown in Fig. 18, home appliances secure high-speed wireless communication by sending a magnetron suspend request to the microwave oven 140. At this time, the oven 140 determines whether or not the magnetron 101 must be suspended according to the priority of the request. The arbitration control of Fig. 19 does not completely suspend the operation of the magnetron 101 or a cooking operation. Instead, it allows the other home appliances to carry out high-speed wireless communication, and at the same time, lowers the microwave output of the magnetron 101.

If high-speed wireless communication between the home appliances is carried out away from the oven 140, the influence of microwave noise from the magnetron 101 on the communication is relatively low. In this case, the operation of the magnetron 101, i.e., a cooking operation may not completely be suspended but may be lowered, to secure proper high-speed wireless communication and maintain the microwave cooking. The example of Fig. 19 is advantageous in such circumstances.

In step S61 of Fig. 19, the oven 140 is in a standby state. In step S62, the oven 140 starts the magnetron 101 to oscillate microwaves, and the microcomputer 143 uses the wireless communication unit 144 to notify the other home appliances 151A, 151B, and 151C of the activation of the magnetron 101. Receiving the notification, the communication apparatuses 152A, 152B, and 152C of the home appliances recognize that microwaves are coming and change a communication speed to one capable of continuing wireless communication even under the microwaves.

In step S71, any one of the wireless communication apparatuses 152A, 152B, and 152C wants to carry out high-speed communication, and in step S72, sends a magnetron output decrease request to the oven 140.

In step S63, the oven 140 receives the request and examines priorities between keeping and decreasing the magnetron output according to the importance of the request and cooking conditions in the oven 140. If it is allowed to decrease the magnetron output, or if the output decrease request is urgent, the oven 140 accepts the request and temporarily decreases the output of the magnetron 101.

After sending the output decrease request, the home appliances start the high-speed wireless communication in step S73 irrespective of whether or not the request is accepted. If the request is not accepted, the high-speed wireless communication will fail due to the influence of microwave noise, and therefore, will be retried.

In step S64, the microcomputer 143 of the oven 140 uses the wireless communication apparatus 144 to periodically ask the other home appliances whether or not the normal magnetron operation can be resumed. In step S74, the wireless communication apparatuses of the home appliances examine priorities between the high-speed communication and a resumption of the normal magnetron operation. If it is determined that the high-speed communication must be continued, it is notified to the oven 140 and the high-speed communication is continued. If it is determined that the normal magnetron operation must be resumed, a cancellation of the magnetron output decrease request is notified to the oven 140 in step S75.

In steps S65 and S66, the microcomputer 143 of the oven 140 receives the cancellation notice and resumes the normal magnetron operation to complete the cooking operation.

This embodiment realizes communication between the oven 140 and the wireless communication apparatuses of the other home appliances even during a cooking operation and enabled the home appliances to share priority data related to the operations thereof and carry out optimum control according to the priority data.

As mentioned above, the wireless communication apparatus according to the present invention synchronizes the start of a time slot for transmitting packets with a zero crossing point of a source voltage. Alternatively, the communication apparatus detects a zero crossing point of the source voltage and starts to transmit packets a predetermined time before the next zero crossing point. This technique aligns the start of a time slot for transmitting packets with the start of an inactive period of a magnetron of a microwave oven and realizes wireless communication during the operation of the oven at a frequency band equivalent to a frequency band of the magnetron.

The wireless communication apparatus according to the present invention sets a threshold voltage to activate an inverter-driven magnetron installed in a microwave oven. The communication apparatus synchronizes the start of a time slot for transmitting packets with a point where a source voltage crosses the threshold voltage. Even during the operation of the oven, the communication apparatus enables wireless communication at a frequency band equivalent to a frequency band of the magnetron.

The wireless communication apparatus according to the present invention equalizes the length of a time slot for transmitting packets with a fraction of a half period of a commercial power source. Even during the operation of an iron-transformer-driven magnetron installed in a microwave oven, the communication apparatus completes a unit communication period within an inactive period of the magnetron. Namely, even during the operation of the oven, the communication apparatus carries out wireless communication at a frequency band equivalent to a frequency band of the magnetron.

The wireless communication apparatus according to the present invention changes the length of a time slot for transmitting packets depending on the frequency of a commercial power source, to cope with areas employing different power source frequencies.

The wireless communication apparatus according to the present invention transmits packets with a carrier of frequencies 2.4 GHz to 2.5 GHz that are the same as those allocated for microwave ovens. The communication apparatus is capable of carrying out wireless communication based on, for example, Bluetooth technology that employs a frequency band equivalent to the microwave oven operating frequency band without the influence of strong microwaves generated by the microwave ovens.

The wireless communication apparatus according to the present invention is applicable to frequency hopping wireless communication to improve noise resistance.

If wireless packet communication using a plurality of time slots fails, the wireless communication apparatus according to the present invention reduces the number of the time slots and resumes the communication. The communication apparatus secures high-speed communication if there is no radio wave interference. If there is radio wave interference by, for example, microwave ovens, the communication apparatus decreases a communication speed, to stabilize the wireless communication.

The wireless communication apparatus according to the present invention employs a receive-state detector. If the receive-state detector detects an improper receive state, the communication apparatus increases transmission power to perform wireless communication at power suitable for communication environments.

The wireless communication apparatus according to the present invention increases transmission power if it is recognized that a magnetron of a microwave oven is in operation. When carrying out wireless communication at a frequency band equivalent to a frequency band of a magnetron installed in a microwave oven, the communication apparatus increases radio wave strength to continue wireless communication during the operation of the magnetron.

The wireless communication apparatus according to the present invention receives a signal with an antenna and detects the waveform of the signal with a wave detector. If the width of the detected signal is different from the width of a communication signal, the communication apparatus determines that a magnetron of a microwave oven is in operation. Then, the communication apparatus increases the strength of radio waves to transmit, or temporarily suspends wireless communication, to avoid the influence of strong microwaves generated by the magnetron.

The microwave oven according to the present invention employs an inverter to produce high-frequency power from a commercial power source and supplies the high-frequency power to a magnetron of the oven. An output controller of the oven inactivates the output of the magnetron for a predetermined period around a zero-volt crossing point of the commercial power source. During this period, the oven enables wireless communication at a frequency band equivalent to a frequency band of the magnetron. The oven maintains the operation of the magnetron and enables wireless communication without interrupting a heating (cooking) operation or deteriorating heating efficiency.

The microwave oven according to the present invention continues a heating (cooking) operation without deteriorating heating efficiency, and at the same time, enables a wireless communication apparatus incorporated in the oven to carry out wireless communication at a frequency band equivalent to a frequency band to operate a magnetron of the oven.

The microwave oven according to the present invention continues a heating operation without deteriorating heating efficiency and enables wireless packet communication at a frequency band equivalent to a frequency band to operate a magnetron installed in the oven.

The microwave oven according to the present invention puts a magnetron in an inactive state for a predetermined period around a zero-volt crossing point of a commercial power source, continues a heating (cooking) operation without deteriorating heating efficiency, and enables wireless packet communication at a frequency band equivalent to a frequency band of the magnetron.

The microwave oven according to the present invention puts a magnetron in an inactive state for a predetermined period irrespective of fluctuation in an output voltage of a full-wave rectifier due to fluctuation in a power source voltage. Even during the operation of the magnetron, the oven enables wireless packet communication at a frequency band equivalent to a frequency band of the magnetron without deteriorating the heating efficiency of the oven.

The microwave oven according to the present invention detects a zero-volt crossing point of a commercial power source, sets the start of a magnetron inactive period a predetermined time after the detected zero-volt crossing point, continues a heating (cooking) operation without deteriorating heating efficiency, and enables wireless packet communication at a frequency band equivalent to a frequency band of a magnetron installed in the oven.

The microwave oven according to the present invention transmits a signal informing that a magnetron of the oven is operating, so that external home appliances may stop wireless communication during the magnetron operation or switch to a communication mode free from the influence of leakage microwaves from the magnetron.

The microwave oven according to the present invention transmits a radio signal informing of a packet specification usable for wireless communication during the operation of a magnetron. External home appliances that receive the signal switch to the informed packet specification during the magnetron operation, to continue wireless communication without the influence of leakage microwaves from the magnetron.

The microwave oven according to the present invention receives a magnetron stop request from a wireless communication apparatus and temporarily stops the output of a magnetron. If home appliances must urgently carry out wireless communication, the home appliances send the magnetron stop request. Then, a highest priority is given to the wireless communication and it is enabled by surely avoiding the influence of the magnetron operation.

The microwave oven according to the present invention receives an output decrease request from a wireless communication apparatus of a home appliance and decreases the output of a magnetron for a given period. If home appliances must urgently carry out wireless communication, the home appliances send the output decrease request. Then, a highest priority is given to the wireless communication and it is enabled by decreasing the influence of the magnetron operation.

An abrupt stoppage of a microwave oven must be avoided for some food or cooking conditions. The microwave oven according to the present invention examines priorities between cooking and a magnetron suspend or decrease request from the outside and determines whether the magnetron operation must be continued, suspended, or decreased. The oven may enable wireless communication if it has a highest priority, or may continue cooking if there is a risk of spoiling the taste of cooking food or missing an intended cooking condition of food by an abrupt stoppage of the oven.

## Claims

1. A wireless communication apparatus provided with transmitting means (27) for transmitting digital information in packets, comprising:
crossing-timing detecting means (24) for detecting a crossing point where a voltage of a commercial power source (21) decreases below a threshold value; and
communication controlling means (25) for synchronizing the start of a time slot used by the transmitting means (27) to transmit the packets with the crossing point detected by the crossing-timing detecting means (24).

2. A wireless communication apparatus as claimed in claim 1, wherein the crossing-timing detecting means (24) is for detecting a zero-volt crossing point of the commercial power source (21); and
the communication controlling means (25) is for controlling the start of the time slot according to the zero-volt crossing point detected by the crossing-timing detecting means (24).

3. The wireless communication apparatus of any one of claims 1 and 2, wherein:
the communication controlling means (25) equalizes the length of the time slot to transmit the packets with a fraction of a half period of the commercial power source (21).

4. The wireless communication apparatus of claim 3, wherein:
the length of the time slot to transmit the packets is changed according to a frequency of the commercial power source (21).

5. The wireless communication apparatus of any one of claims 1 to 4, wherein:
a carrier to transmit the packets has a frequency range of 2.4 GHz to 2.5 GHz allocated for a microwave oven (1).

6. The wireless communication apparatus of any one of claims 1 to 5, employing a frequency hopping wireless communication technique.

7. The wireless communication apparatus of any one of claims 1 to 6, wherein:
if packet communication using a plurality of time slots fails, the packet communication is retried after reducing the number of the time slots.

8. The wireless communication apparatus of any one of claims 1 to 7, comprising:
receive-state detecting means (28) for detecting a packet receiving state; and
transmission power switching means (34) for increasing transmission power when the receive-state detecting means (28) detects a poor receiving state.

9. The wireless communication apparatus of any one of claims 1 to 8, comprising:
recognizing means (37) for recognizing whether or not the microwave oven (1) is operating; and
transmission power switching means (34) for increasing transmission power when the recognizing means (37) recognizes that the microwave oven (1) is operating.

10. The wireless communication apparatus according to claim 9, wherein:
the recognizing means (37) recognizes whether or not a microwave oven is operating according to information sent from a wireless communication apparatus incorporated in the microwave oven.

11. A wireless communication apparatus as claimed in claim 1, wherein the transmitting means (27) is for transmitting digital information in packets at a carrier frequency of 2.4 GHz to 2.5 GHz allocated for a microwave oven (1), and wherein the apparatus further comprises:
an antenna (30) for receiving radio waves of the same frequency range;
wave detecting means (36) for detecting the waveform of a signal received by the antenna; and
microwave-oven-operation detecting means (37) for detecting, according to the waveform detected by the wave detecting means (36), that a microwave oven is operating if the detected waveform has a signal width different from a signal width characteristic to a communication signal.

12. A microwave oven provided with a magnetron (101) for generating microwaves and an inverter (102) for producing high-frequency power (111) from a commercial power source (107) and supplying the high-frequency power to the magnetron (101), comprising:
an output controller (115) to stop the output of the magnetron (101) for a predetermined period around a zero-volt point of the commercial power source (107).

13. The microwave oven of claim 12, comprising:
a wireless communication apparatus (144).

14. The microwave oven of claim 13, wherein:
the wireless communication apparatus (144) carries out frequency hopping wireless communication; and
the output controller (115) stops the output of the magnetron (101) for a period of "a time slot for wireless-communication packets x 3 + acknowledging time."

15. The microwave oven of claim 12, comprising:
a full-wave rectifier (117) to full-wave rectify the commercial power source (107) and supply the rectified power to the inverter (102), and a comparator (118) to compare an output voltage (116) of the full-wave rectifier (117) with a reference voltage (119),
the output controller (115) stopping the output of the magnetron (101) for a period (τ11) in which the output voltage (116) of the full-wave rectifier (117) is below the reference voltage (119).

16. The microwave oven of claim 15, wherein:
the comparator (118) changes the reference voltage (119) in proportion to a peak value of the output voltage (116) of the full-wave rectifier (117).

17. The microwave oven of claim 12, wherein:
the output controller (115) detects a time point when the commercial power source (107) crosses a zero volt level and stops the output of the magnetron (101) for the period (τ11) a predetermined time after the detected time point.

18. The microwave oven of claim 12, comprising:
notifying means (143, 144) to determine whether or not the magnetron (101) is operating, and if it is operating, notify the activeness of the magnetron.

19. The microwave oven of claim 18, wherein:
the notifying means (143, 144) transmits a wireless signal notifying a packet specification that is achievable under the active magnetron (101).

20. The microwave oven of any one of claims 13 and 14, comprising:
means (143, 144) to suspend the operation of the magnetron (101) upon receiving a magnetron suspend request.

21. The microwave oven of any one of claims 13 and 14, comprising:
means (143, 144) to decrease the output of the magnetron (101) upon receiving a magnetron output decrease request.

22. The microwave oven of any one of claims 20 and 21, comprising:
means for receiving operating conditions from a controller (115, 141) of the microwave oven; and
arbitration means (143, 144) to examine priorities between the operating conditions and the magnetron suspend request or magnetron output decrease request and determine whether the output of the magnetron (101) must be maintained, suspended, or decreased.
